# EUROPÄISCHE PATENTSCHRIFT

(11) **EP 2 671 046 B1**
(45) Veröffentlichungstag und Bekanntmachung des Hinweises auf die Patenterteilung: **15.08.2018**
(21) Anmeldenummer: 12701234.2
(22) Anmeldetag: 09.01.2012
(51) Int. Cl.: G01C 3/08, G01C 15/00, G01C 9/02

(54) **SYSTEM MIT EINER MESSSCHIENE UND EINEM MESSGERÄT**
SYSTEM WITH A MEASURING RAIL AND A MEASURING DEVICE
SYSTÈME AVEC UNE BARRE DE MESURE ET UN DISPOSITIF DE MESURE

(30) Priorität: 02.02.2011 DE 102011003495
(43) Veröffentlichungstag der Anmeldung: 11.12.2013
(73) Patentinhaber: Robert Bosch GmbH, 70442 Stuttgart (DE)
(72) Erfinder: FRANK, Michael, 75015 Bretten (DE); WOLF, Peter, 70771 Leinfelden-Echterdingen (DE); GROS, Nicolas, 70599 Stuttgart (DE); FUELLEMANN, Heiko, 71679 Asperg (DE); BEN HASSINE, Ilyes, 70771 Leinfelden (DE)
(86) Internationale Anmeldenummer: PCT/EP2012/050205
(87) Internationale Veröffentlichungsnummer: WO 2012/104112

(56) Entgegenhaltungen:
- DE-U1-202010 013 902
- US-A1- 2009 113 733

## Beschreibung

### Stand der Technik

Die Erfindung geht aus von einem System mit einer Messschiene und einem Messgerät nach dem Oberbegriff des Anspruchs 1.

Es ist bereits ein System mit einer Messschiene und einem Messgerät, das zumindest eine Recheneinheit, ein Neigungsmessmittel und ein elektronisches Entfernungsmessmittel aufweist, vorgeschlagen worden. Die Messschiene und das Messgerät sind dabei einstückig Aus den Dokumenten DE202010013902 U1 und US20090113733 A1 sind zudem Messschienen mit koppelbaren Messgeräten bekannt.

### Offenbarung der Erfindung

Die Erfindung geht aus von einem System mit einer Messschiene und einem Messgerät aus, wobei das Messgerät zumindest eine Recheneinheit, ein Neigungsmessmittel und ein elektronisches Entfernungsmessmittel aufweist, und wobei das System eine Koppelvorrichtung aufweist, die dazu vorgesehen ist, die Messschiene und das Messgerät von einem Bediener lösbar zu koppeln. Unter einer "Messschiene" soll insbesondere eine Vorrichtung verstanden werden, die zumindest zwei voneinander beabstandete Anschlagsbereiche aufweist, die eine Messebene aufspannen. Vorzugsweise sind die Anschlagsbereiche als parallele, insbesondere zusammenhängende Flächen ausgebildet. Insbesondere sind die Anschlagsbereiche zumindest teilweise wenigstens 20 cm, vorzugsweise wenigstens 40 cm, besonders bevorzugt wenigstens 60 cm voneinander beabstandet angeordnet. Erfindungsgemäß sind die beiden Anschlagsbereiche Teilflächen einer die Messebene aufspannenden, insbesondere durchgehenden Anschlagsfläche. Vorzugsweise weist die Messschiene zumindest zwei Anschlagsflächen auf. Vorzugsweise ist die Messschiene zumindest teilweise aus einem, dem Fachmann als sinnvoll erscheinenden Material, bevorzugt jedoch aus Kunststoff und/oder vorteilhaft aus Aluminium. Insbesondere soll unter einer "Recheneinheit" eine Einheit mit einem Informationseingang, einer Informationsverarbeitung und einer Informationsausgabe verstanden werden. Vorteilhaft weist die Recheneinheit zumindest einen Prozessor, Eingabeschnittstellen, Ausgabeschnittstellen und/oder vorteilhaft in einem Speicher der Recheneinheit gespeicherte Betriebsprogramme und/oder Berechnungsroutinen auf. Unter einem "Neigungsmessmittel" soll insbesondere ein Mittel verstanden werden, das zumindest dazu vorgesehen ist, eine Ausrichtung um zumindest eine Achse relativ zu einer Richtung einer Schwerkraft zu ermitteln und insbesondere zumindest eine Information darüber vorzugsweise in elektronischer Form bereitzustellen. Vorzugsweise misst das Neigungsmessmittel eine Ausrichtung um wenigstens zwei Achsen, vorteilhaft drei Achsen, die vorzugsweise senkrecht zueinander ausgerichtet sind. Insbesondere soll unter einem "Entfernungsmessmittel" ein Mittel verstanden werden, das dazu vorgesehen ist, eine Entfernung zwischen einem Referenzpunkt und einem Messobjekt zu bestimmen. In diesem Zusammenhang soll unter "elektronisch" insbesondere verstanden werden, dass das Entfernungsmessmittel zumindest eine elektrische Kenngröße mit zumindest einer Information über eine gemessene Entfernung ausgibt. Vorzugsweise ist die Recheneinheit dazu vorgesehen, diese Kenngröße auszulesen und/oder zu empfangen. Insbesondere soll unter einer "Koppelvorrichtung" eine Vorrichtung verstanden werden, die dazu vorgesehen ist, die Messschiene und das Messgerät insbesondere in einer vorgesehenen Position relativ zueinander unbewegbar auszurichten. Vorzugsweise weist die Koppelvorrichtung ein, dem Fachmann als sinnvoll erscheinendes Koppelmittel, vorzugsweise jedoch ein Mittel zur Erstellung eines Kraftschlusses und/oder eines Formschlusses, auf. Insbesondere ist das Koppelmittel als ein Riegelelement, bevorzugt als ein Rastelement, besonders bevorzugt als ein Exzenterelement, ausgebildet. Unter "vorgesehen" soll insbesondere speziell programmiert, ausgelegt und/oder ausgestattet verstanden werden. Insbesondere soll unter der Wendung "von einem Bediener lösbar" verstanden werden, dass die Verbindung der Koppelvorrichtung von dem Bediener zerstörungsfrei und vorteilhaft werkzeuglos trennbar ausgebildet ist. Durch die erfindungsgemäße Ausgestaltung des Systems kann das Messgerät komfortabel besonders vielseitig eingesetzt werden. Es ist konstruktiv einfach eine hohe Messgenauigkeit, insbesondere bei einer Neigungsmessung, möglich.

In einer weiteren Ausgestaltung wird vorgeschlagen, dass die Messschiene eine Haupterstreckung aufweist, die wenigstens doppelt so groß ist wie eine Haupterstreckung des Messgeräts, wodurch eine besonders hohe Messgenauigkeit, insbesondere bei einer Neigungsmessung, möglich ist. Insbesondere soll unter einer "Haupterstreckung" eine maximale Erstreckung verstanden werden, und zwar vorteilhaft parallel zu zumindest einer Anschlagsfläche. Vorteilhaft ist die Haupterstreckung der Messschiene wenigstens drei Mal, vorzugsweise vier Mal so groß wie die Haupterstreckung des Messgeräts.

Des Weiteren wird vorgeschlagen, dass die Messschiene ein Koppelmittel der Koppelvorrichtung aufweist, das dazu vorgesehen ist, das Messgerät an der Messschiene zu befestigen, wodurch bei dem Messgerät auf ein optisch sichtbares und konstruktiv aufwendiges Koppelmittel verzichtet werden kann. Vorzugsweise ist das Koppelmittel dazu vorgesehen, eine Befestigungskraft auf einer Außenfläche des Messgeräts zu bewirken. Besonders bevorzugt bewirkt das Koppelmittel eine Befestigungskraft auf einen Bereich der Außenfläche, die von anderen Bereichen der Außenfläche ununterscheidbar ist. Gemäß der Erfindung weist das Messgerät ein Schienenerkennungsmittel auf, das in zumindest einem Betriebszustand zumindest eine Information über eine Kopplung mit der Messschiene bereitstellt, wodurch eine besonders komfortable und durch eine verbesserte Kalibrierung genaue Messung einer Neigung möglich ist. Vorzugsweise weist das Schienenerkennungsmittel zumindest eine Rechenroutine auf, die in zumindest einem Betriebszustand von der Recheneinheit ausgeführt wird. Besonders bevorzugt ist das Schienenerkennungsmittel als eine Rechenroutine ausgebildet, die in zumindest einem Betriebszustand von der Recheneinheit ausgeführt wird. Insbesondere soll unter einer "Information über eine Kopplung" eine Information verstanden werden, die zumindest teilweise von einer Verbindung der Messschiene mit dem Messgerät abhängig ist. Unter dem Begriff "bereitstellen" soll insbesondere verstanden werden, dass das Schienenerkennungsmittel dazu vorgesehen ist, die Information zu senden und/oder auslesbar auszugeben.

Weiterhin wird vorgeschlagen, dass das Entfernungsmessmittel dazu vorgesehen ist, eine Entfernung mittels eines Laserstrahls zu bestimmen, wodurch eine hohe Genauigkeit und ein großer Komfort erreicht werden können. Unter einem "Laserstrahl" soll insbesondere ein Lichtstrahl mit einem Öffnungswinkel kleiner als 2 Grad, vorteilhaft kleiner als 1 Grad, besonders vorteilhaft kleiner als 0,5 Grad, verstanden werden. Vorzugsweise weist der Lichtstrahl in dem Öffnungswinkel wenigstens 75 % seiner abgestrahlten Energie auf. Gemäß der Erfindung ist das Schienenerkennungsmittel dazu vorgesehen, die Information mit dem Entfernungsmessmittel zu ermitteln, wodurch auf einen zusätzlichen Sensor, insbesondere nur zur Erfassung einer Kopplung zwischen dem Messgerät und der Messschiene, verzichtet werden kann. Unter der Wendung "die Information zumindest mit dem Laserstrahl zu ermitteln" soll insbesondere verstanden werden, dass die Information des Schienenerkennungsmittels von einer durch den Laserstrahl ermittelten Kenngröße abhängig ist.

Des Weiteren wird vorgeschlagen, dass die Recheneinheit dazu vorgesehen ist, eine Anschlagsfläche von einer Kenngröße des Neigungsmessmittels abhängig festzulegen, wodurch ein besonders komfortabler Betrieb konstruktiv einfach möglich ist. Vorteilhaft weist das Messgerät und/oder bevorzugt die Messschiene zumindest zwei, vorteilhaft zumindest drei unterschiedlich ausgerichtete Anschlagsfläche auf. Unter einer "Anschlagsfläche" soll insbesondere eine Fläche verstanden werden, die bei einer Neigungsmessung an dem Messobjekt das Messobjekt berührt. Erfindungsgemäß spannt die Anschlagsfläche eine Messebene auf, deren Ausrichtung das Neigungsmessmittel bestimmt. Vorteilhaft bestimmt das Neigungsmessmittel bei einer Messung eine Neigung der Messebene relativ zu einer Richtung einer Schwerkraft. Unter "festlegen" soll in diesem Zusammenhang insbesondere verstanden werden, das die Recheneinheit von zumindest einer Kenngröße insbesondere des Neigungsmessmittels eine Messebene festlegt, relativ zu der das Neigungsmessmittel eine Ausrichtung ermittelt.

Gemäß der Erfindung ist die Recheneinheit dazu vorgesehen, von der Information über eine Kopplung mit der Messschiene abhängig einen Winkelmessmodus zu aktivieren, wodurch der Bediener den Winkelmessmodus nicht von Hand aktivieren muss. Unter einem "Winkelmessmodus" soll insbesondere ein Modus verstanden werden, in den zumindest eine Information über die Ausrichtung der Messebene von der Recheneinheit ausgewertet und/oder vorteilhaft insbesondere vorrangig an den Bediener ausgegeben wird. Vorzugsweise weist die Recheneinheit zusätzlich zu dem Winkelmessmodus einen Entfernungsmessmodus auf, in dem eine gemessene Entfernung vorrangig ausgegeben wird.

Zudem wird vorgeschlagen, dass die Recheneinheit zumindest einen Speicher aufweist, der in zumindest einem Betriebszustand zumindest einen Kalibrierungsdatensatz zur Kalibrierung des Neigungsmessmittels umfasst, wodurch besonders genaue Neigungsmessungen möglich sind. Unter einem "Speicher" soll insbesondere ein Mittel verstanden werden, das dazu vorgesehen ist, zumindest eine Information, vorteilhaft von einer Stromversorgung unabhängig, zu speichern. Insbesondere soll unter einem "Kalibrierungsdatensatz" zumindest eine Information verstanden werden, die einen Unterschied zwischen einer von dem Sensor bestimmten Richtung der Schwerkraft und einer tatsächlichen Richtung der Schwerkraft beschreibt.

Weiterhin wird vorgeschlagen, dass die Recheneinheit zumindest eine Kalibrierungsroutine aufweist, die dazu vorgesehen ist, einen Kalibrierungsdatensatz des Neigungsmessmittels zu erstellen, wodurch besonders genaue Neigungsmessungen unter verschiedenen Einsatzbedingungen erreicht werden können. Insbesondere kann eine Funktionsstörung des Neigungsmessmittels vorteilhaft erkannt und/oder kompensiert werden. Unter einer "Kalibrierungsroutine" soll insbesondere ein von einem Prozessor der Recheneinheit ausführbares Programm verstanden werden. Insbesondere soll unter dem Begriff "überprüfen" verstanden werden, dass die Kalibrierungsroutine einen Unterschied zwischen einer von dem Sensor bestimmten Richtung der Schwerkraft und einer tatsächlichen Richtung der Schwerkraft bestimmt und mit dem Kalibrierungsdatensatz vergleicht. Vorzugsweise verändert die Kalibrierungsroutine nach der Überprüfung den Kalibrierungsdatensatz. Alternativ oder zusätzlich könnte die Routine den Kalibrierungsdatensatz ungeprüft verändern.

Des Weiteren wird vorgeschlagen, dass die Messschiene ein Optikmittel aufweist, das dazu vorgesehen ist, einen Laserstrahl zur Erkennung einer Kopplung zu leiten, wodurch mit geringem konstruktiven Aufwand eine komfortable Handhabung erreicht werden kann. Unter einem "Optikmittel" soll insbesondere ein Mittel verstanden werden, das dazu vorgesehen ist, einen Laserstrahl umzuleiten. Vorzugsweise weist das Optikmittel zumindest einen Reflektor auf. Insbesondere soll unter der Wendung "zur Erkennung einer Kopplung" verstanden werden, dass das Optikmittel bei einer Kopplung den Laserstrahl umleitet, wodurch die Kopplung, und zwar zwischen der Messschiene und dem Messgerät, erfassbar ist.

Zudem wird vorgeschlagen, dass die Messschiene eine Aussparung umfasst, die dazu vorgesehen ist, das Messgerät in zumindest einem Betriebszustand aufzunehmen, wodurch das Messgerät bei einer Neigungsmessung vorteilhaft geschützt ist. Unter einer "Aussparung" soll insbesondere ein von der Messschiene begrenzter Bereich verstanden werden, den in zumindest einem Betriebszustand das Messgerät auf zumindest einer Ebene, die vorteilhaft parallel zu Haupterstreckung ausgerichtet ist, um mehr als 180 Grad, vorteilhaft mehr als 270 Grad, umschließt. Vorzugsweise nimmt die Aussparung das Messgerät zu mehr als 50 %, besonders bevorzugt zu mehr als 75 % auf.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine erfindungsgemäßes System mit einer Messschiene und einem Messgerät in einer Draufsicht und
- Fig. 2: das System aus Figur 1 in einer perspektivischen Darstellung.

### Beschreibung des Ausführungsbeispiels

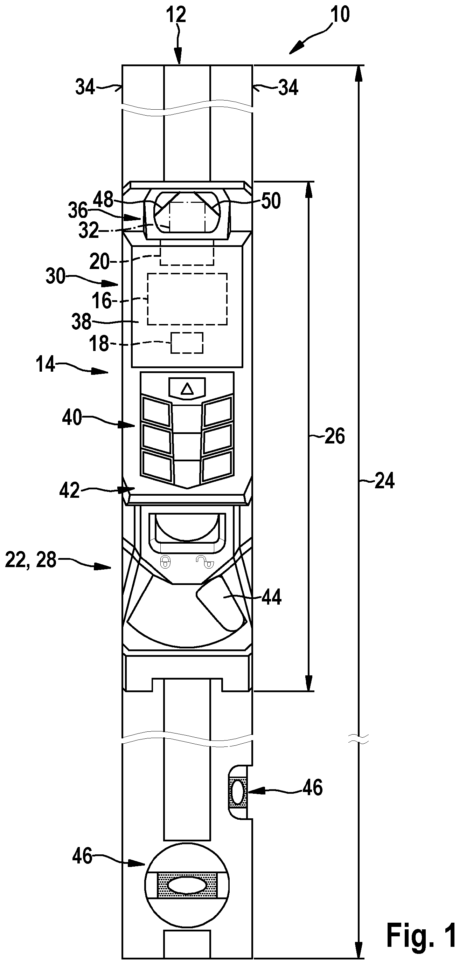

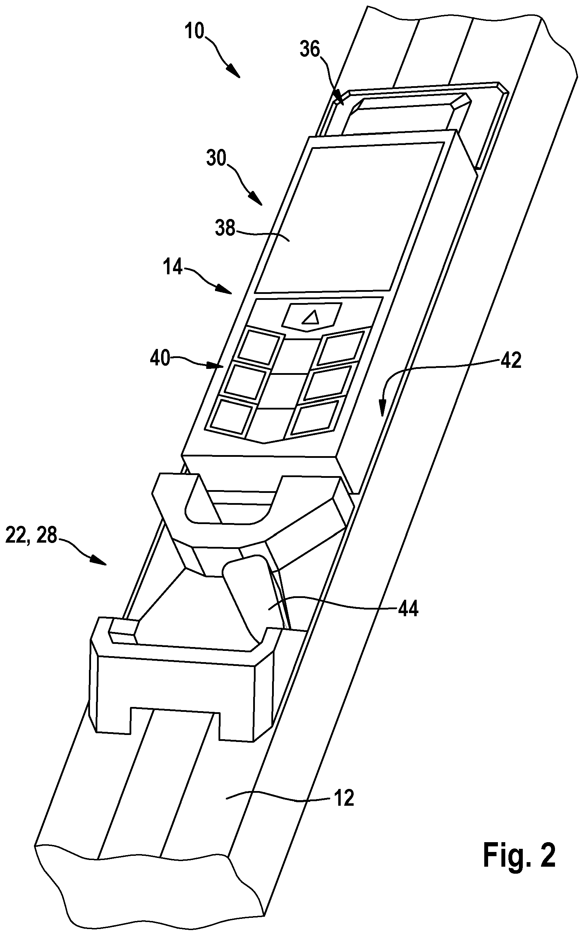

Figur 1 und Figur 2 zeigen ein erfindungsgemäßes System 10 mit einer Messschiene 12 und einem Messgerät 14. Das Messgerät 14 weist eine Recheneinheit 16, ein Neigungsmessmittel 18, ein elektronisches Entfernungsmessmittel 20, ein Display 38 und eine Bedienvorrichtung 40 auf. Das Entfernungsmessmittel 20 erfasst bei einer Entfernungsmessung eine Entfernung zwischen dem Entfernungsmessmittel 20 und einem nicht näher dargestellten Messobjekt. Dazu weist es einen nicht näher dargestellten Laser auf, der einen Laserstrahl 32 aussendet. Bei der Entfernungsmessung reflektiert das Messobjekt einen Teil des Laserstrahls 32. Ein nicht näher dargestellter Sensor des Entfernungsmessmittels 20 erfasst einen Teil des reflektierten Lichts des Laserstrahls 32.

Die Recheneinheit 16 weist eine Berechnungsroutine auf, die die Entfernung mittels des Laserstrahls 32 bestimmt. Dabei wertet die Recheneinheit 16 eine Laufzeit, eine Phasenlage und/oder eine Amplitude des Teils des reflektierten Lichts des Laserstrahls 32 aus. Die Recheneinheit 16 stellt einen Wert der Entfernung für den Bediener auf dem Display 38 dar. Mittels der Bedienvorrichtung 40 steuert ein Bediener das Messgerät 14. Zu einer Entfernungsmessung ist das Messgerät 14 von der Messschiene 12 getrennt einsetzbar. Alternativ oder zusätzlich könnte eine Messschiene derart ausgebildet sein, eine Entfernungsmessung mit gekoppeltem Messgerät 14 ermöglich ist.

Das Neigungsmessmittel 18 erfasst bei einem Betrieb eine Ausrichtung des Messgeräts 14 und ggf. der Messschiene 12 relativ zu einer Richtung der Schwerkraft. Dazu erfasst das Neigungsmessmittel 18 einen Beschleunigungswert in drei zueinander senkrecht ausgerichteten Richtungen. Alternativ könnte ein Neigungsmessmittel auch nur Beschleunigungswerte in zwei zueinander senkrecht ausgerichteten Richtungen bestimmen. Das Neigungsmessmittel 18 bestimmt eine Richtung der Schwerkraft, indem er eine auf eine Masse wirkende Schwerkraft erfasst. Die Recheneinheit 16 wertet die von dem Neigungsmessmittel 18 bestimmte Ausrichtung aus. Bei einem Entfernungsmessvorgang signalisiert die Recheneinheit 16 dem Bediener eine horizontale, vertikale und/oder eine andere vorbestimmte Ausrichtung des Laserstrahls 32.

Das System weist eine Koppelvorrichtung 22 auf. Die Koppelvorrichtung 22 koppelt zumindest für eine Neigungsmessung an einem Messobjekt die Messschiene 12 und das Messgerät 14 von einem Bediener werkzeuglos und zerstörungsfrei lösbar. Die Messschiene 12 weist eine Haupterstreckung 24 auf, die in etwa vier Mal so groß ist wie eine Haupterstreckung 26 des Messgeräts 14. Die Haupterstreckung 24 der Messschiene 12 beträgt in etwa 60 cm. Die Messschiene 12 weist drei Anschlagsflächen 34 auf, die parallel zu der Haupterstreckung 26 ausgerichtet sind. Eine erste und eine zweite der Anschlagsflächen 34 sind senkrecht zu einer dritten der Anschlagsflächen 34 ausgerichtet. Die Anschlagsflächen 34 erstrecken sich im Wesentlichen entlang der gesamten Haupterstreckung 24 der Messschiene 12.

Die Messschiene 12 weist eine Aussparung 42 und ein Koppelmittel 28 der Koppelvorrichtung 22 auf. Das Koppelmittel 28 befestigt zumindest bei einer Neigungsmessung an einem Messobjekt das Messgerät 14 an der Messschiene 12. In einem gekoppelten Betriebszustand ist das Messgerät 14 in der Aussparung 42 der Messschiene 12 angeordnet, wodurch das Messgerät 14 vorteilhaft geschützt ist. Das Koppelmittel 28 fixiert das Messgerät 14 dabei in der Aussparung 42. Das Koppelmittel 28 weist ein hier nicht näher dargestelltes, drehbar gelagertes Exzenterelement und ein Bedienelement 44 auf, mit dem der Bediener das Exzenterelement drehen kann. Eine Drehung des Bedienelements 44 bewirkt eine Änderung einer durch das Exzenterelement auf das Messgerät 14 wirkende Befestigungskraft, die das Messgerät 14 zumindest kraftschlüssig befestigt. Die Messschiene 12 weist zwei Libellen 46 auf, wodurch die Messschiene 12 ohne Messgerät 14 als herkömmliche Wasserwaage verwendbar ist.

Das Messgerät 14 weist ein Schienenerkennungsmittel 30 auf. Das Schienenerkennungsmittel 30 stellt bei einem Betrieb eine Information über eine Kopplung mit der Messschiene 12 bereit. Die Information gibt an, ob die Messschiene 12 mit dem Messgerät 14 gekoppelt ist. Die Recheneinheit 16 aktiviert von der Information abhängig einen Winkelmessmodus. In dem Winkelmessmodus stellt die Recheneinheit 16 in erster Linie eine Ausrichtung des Systems 10 auf dem Display 38 dar.

Das Schienenerkennungsmittel 30 ermittelt die Information mit dem Laserstrahl 32. Dazu führt das Schienenerkennungsmittel 30 eine Entfernungsmessung durch. Das Schienenerkennungsmittel 30 führt eine Schienenerkennung bei einem Einschalten des Messgeräts 14 durch. Alternativ könnte das Schienenerkennungsmittel 30 eine Schienenerkennung periodisch durchführen. Die Messschiene 12 weist ein Optikmittel 36 auf, das den Laserstrahl 32 zur Erkennung einer Kopplung leitet. Das Optikmittel 36 weist zwei Reflexionsfläche 48, 50 auf. Die Reflexionsflächen 48, 50 leiten den Laserstrahl 32 in einem gekoppelten Betriebszustand über eine definierte Entfernung, insbesondere kleiner als 8 cm, von dem Laser zu dem Sensor. Die Recheneinheit 16 erkennt anhand des empfangenen Laserstrahls 32, ob die Messschiene 12 und das Messgerät 14 gekoppelt sind. Dazu wertet die Recheneinheit 16 vorteilhaft neben der Entfernung eine Amplitude des empfangenen Laserstrahls 32 aus.

Die Recheneinheit 16 legt bei einer Neigungsmessung eine verwendete Anschlagsfläche 34 von einer Kenngröße des Neigungsmessmittels 18 abhängig fest. Die Recheneinheit 16 richtet eine Anzeige des Displays 38 von der verwendeten Anschlagsfläche 34 abhängig aus. Zusätzlich kann der Bediener mittels der Bedienvorrichtung 40 eine Ausrichtung der Anzeige des Displays 38 verändern.

Die Recheneinheit 16 weist einen hier nicht näher dargestellten Speicher auf, der zwei Kalibrierungsdatensätze zur Kalibrierung des Neigungsmessmittels 18 umfasst. Ein erster der zwei Kalibrierungsdatensätze dient zur Kaibrierung, wenn die Messschiene 12 und das Messgerät 14 ungekoppelt sind. Ein zweiter der zwei Kalibrierungsdatensätze dient zur Kaibrierung, wenn die Messschiene 12 und das Messgerät 14 gekoppelt sind. Die Recheneinheit 16 lädt automatisch den entsprechenden Kalibrierungsdatensatz. Die Recheneinheit 16 weist eine Kalibrierungsroutine auf. Die Kalibrierungsroutine erstellt bei einem Kalibrierungsvorgang einen der zwei Kalibrierungsdatensätze. Dazu verwendet die Kalibrierungsroutine ein, dem Fachmann als sinnvoll erscheinendes Verfahren, vorteilhaft jedoch eine 180 Grad-Umschlagsmessung, eine Messung einer bekannten, insbesondere horizontalen Ausrichtung und/oder eine "Shaking"-Kalibrierung.

## Patentansprüche

1. System mit einem Messgerät (14), das zumindest eine Recheneinheit (16), ein Neigungsmessmittel (18) und ein elektronisches Entfernungsmessmittel (20) aufweist, mit einer Messschiene (12) und mit einer Koppelvorrichtung (22), die dazu vorgesehen ist, die Messschiene (12) und das Messgerät (14) von einem Bediener lösbar zu koppeln, wobei die Messschiene (12) zwei voneinander beabstandete Anschlagsbereiche aufweist, die Teilflächen einer Anschlagsfläche sind, wobei die Anschlagsfläche eine Messebene aufspannt, deren Ausrichtung das Neigungsmessmittel in einem gekoppelten Zustand von Messschiene und Messgerät bestimmt, **dadurch gekennzeichnet, dass** das Messgerät (14) ein Schienenerkennungsmittel (30) aufweist, das in zumindest einem Betriebszustand zumindest eine Information über die Kopplung des Messgeräts (14) mit der Messschiene (12) bereitstellt, wobei das Schienenerkennungsmittel (30) dazu vorgesehen ist, die Information mit dem Entfernungsmessmittel (20) zu ermitteln, wobei ferner die Recheneinheit (16) des Messgeräts (14) dazu vorgesehen ist, von der Information abhängig einen Winkelmessmodus des Messgeräts (14) zu aktivieren, in dem zumindest eine Information über die Ausrichtung von der Recheneinheit ausgewertet und/oder an einen Bediener ausgegeben wird.

2. System nach Anspruch 1, **dadurch gekennzeichnet, dass** die Messschiene (12) eine Haupterstreckung (24) aufweist, die wenigstens doppelt so groß ist wie eine Haupterstreckung (26) des Messgeräts (14).

3. System nach Anspruch 1 oder 2, **dadurch gekennzeichnet, dass** die Messschiene (12) ein Koppelmittel (28) der Koppelvorrichtung (22) aufweist, das dazu vorgesehen ist, das Messgerät (14) an der Messschiene (12) zu befestigen.

## Claims

1. System with a measuring device (14) which has at least one arithmetic logic unit (16), an inclination measuring means (18) and an electronic distance measuring means (20), with a measuring bar (12) and with a coupling device (22) which is provided so that an operator can releasably couple the measuring bar (12) and the measuring device (14), wherein the measuring bar (12) has two stop areas which are spaced apart from one another and which are subareas of a stop surface, wherein the stop surface defines a measuring plane whose alignment determines the inclination measuring means in a coupled state of measuring bar and measuring device, **characterized in that** the measuring device (14) has a bar detecting means (30) which in at least one operating state provides at least one information item relating to the coupling of the measuring device (14) to the measuring bar (12), wherein the bar detecting means (30) is provided in order to determine the information item with the aid of the distance measuring means (20), wherein furthermore, the arithmetic logic unit (16) of the measuring device (14) is provided in order to activate an angle measuring mode of the measuring device (14) as a function of the information item, in which angle measuring mode at least one information item relating to the alignment of the arithmetic logic unit is evaluated and/or output to an operator.

2. System according to Claim 1, **characterized in that** the measuring bar (12) has a main extent (24) which is at least twice as large as a main extent (26) of the measuring device (14).

3. System according to Claim 1 or 2, **characterized in that** the measuring bar (12) has a coupling means (28) of the coupling device (22) which is provided for fastening the measuring device (14) on the measuring bar (12).

## Revendications

1. Système comprenant un appareil de mesure (14) qui présente au moins une unité de calcul (16), un moyen de mesure d'inclinaison (18) et un moyen de mesure de distance électronique (20), avec une règle de mesure (12) et avec un dispositif d'accouplement (22) qui est prévu pour accoupler la règle de mesure (12) et l'appareil de mesure (14) de manière détachable par un opérateur, la règle de mesure (12) présentant deux régions de butée espacées l'une de l'autre qui sont des surfaces partielles d'une surface de butée, la surface de butée s'étendant par-dessus un plan de mesure dont l'orientation est définie par le moyen de mesure d'inclinaison dans un état accouplé de la règle de mesure et de l'appareil de mesure, **caractérisé en ce que** l'appareil de mesure (14) présente un moyen de reconnaissance de règle (30) qui, dans au moins un état de fonctionnement, fournit au moins une information concernant l'accouplement de l'appareil de mesure (14) à la règle de mesure (12), le moyen de reconnaissance de règle (30) étant prévu pour détecter l'information avec le moyen de mesure de distance (20), l'unité de calcul (16) de l'appareil de mesure (14) étant en outre prévue pour activer un mode de mesure d'angle de l'appareil de mesure (14) en fonction de l'information, dans lequel mode de mesure au moins une information concernant l'orientation de l'unité de calcul est analysée et/ou est envoyée à un opérateur.

2. Système selon la revendication 1, **caractérisé en ce que** la règle de mesure (12) présente une étendue principale (24) qui est au moins deux fois plus grande qu'une étendue principale (26) de l'appareil de mesure (14).

3. Système selon la revendication 1 ou 2, **caractérisé en ce que** la règle de mesure (12) présente un moyen d'accouplement (28) du dispositif d'accouplement (22) qui est prévu pour fixer l'appareil de mesure (14) à la règle de mesure (12) .
